# EUROPEAN PATENT SPECIFICATION

(11) **EP 1 885 126 B1**
(45) Date of publication and mention of the grant of the patent: **08.08.2012**
(21) Application number: 06756447.6
(22) Date of filing: 22.05.2006
(51) Int. Cl.: H04N 7/01

(54) **VIDEO DISPLAY DEVICE**
VIDEO-DISPLAY-EINRICHTUNG
DISPOSITIF D'AFFICHAGE VIDEO

(30) Priority: 25.05.2005 JP 2005152877
(43) Date of publication of application: 06.02.2008
(73) Proprietor: Sharp Kabushiki Kaisha, Osaka-shi, Osaka 545-8522 (JP)
(72) Inventor: TETSUKA, Yasushi, Tochigi 320-0003 (JP); KOJIMA,Katsuo, Tochigi 329-2164 (JP); ARAKI, Tetsu, Chiba 267-0061 (JP); TAKEDA, Shiroh, Mie 513-0037 (JP)
(74) Representative: Müller - Hoffmann & Partner
(86) International application number: PCT/JP2006/310141
(87) International publication number: WO 2006/126483

(56) References cited:
- EP-A1- 0 609 843
- EP-A1- 1 361 750
- EP-A1- 1 404 130
- EP-A1- 1 613 068
- WO-A1-99/56467
- JP-A- 11 133 939
- JP-A- 2000 338 925
- JP-A- 2001 236 042
- JP-A- 2004 040 696
- US-A- 5 132 793
- US-A1- 2005 062 889
- US-B1- 6 664 970

## Description

### TECHNICAL FIELD

The present invention relates to a video display device for displaying a video signal.

### BACKGROUND OF THE INVENTION

A video display device is known that uses la matrix display panel such as a liquid crystal panel and a plasma panel for displaying a video source. Such a video display device ordinarily uses a display panel conforming to the display standard of a personal computer. For example, a 4:3-type VGA (640 dots × 480 dots) display panel is composed of 480 pixel rows and an XGA (1024 dots × 768 dots) display panel is composed of 768 pixel rows.

On the other hand, specified formats of the video source are the 576i of PAL (phase alternation line) and the 1080i, the 720p, the 1080p, etc., of HDTV (High Definition Television). There are also the 576p, etc., specified for a different broadcasting system. The 576i represents an interlaced signal of 576 scanning lines and the 1080i represents an interlaced signal of 1080 scanning lines. Namely, the number of scanning lines of the video source is different from the number of lines of pixels of the matrix display panel.

Therefore, to display the video source on the matrix display panel, a vertical scaling must be performed. The vertical scaling as used herein refers to processing of producing a new horizontal scanning signal by performing operations such as adding/averaging of horizontal scanning signals adjacent to each other at a predetermined ratio, for converting the number of video scanning lines to the number of pixels in the vertical direction of the panel. To display the video source on the matrix display panel, a horizontal scaling is performed, as required, together with the vertical scaling.

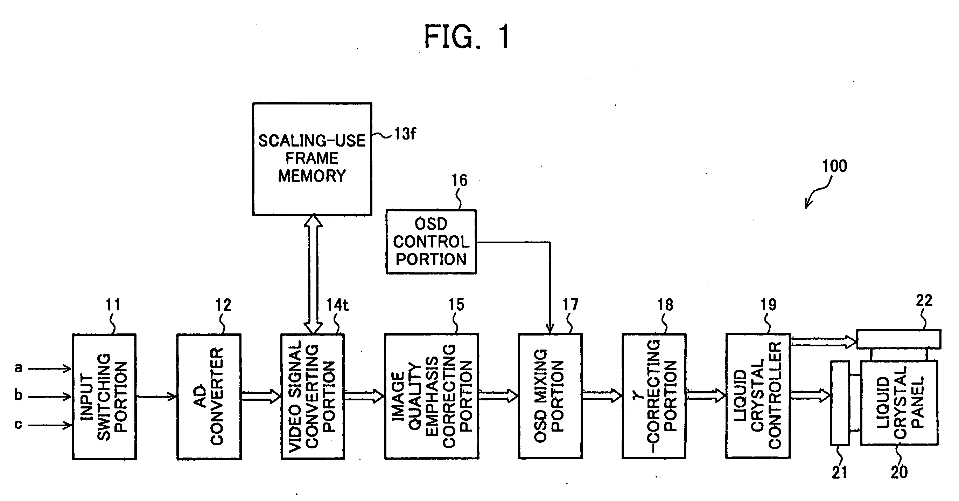

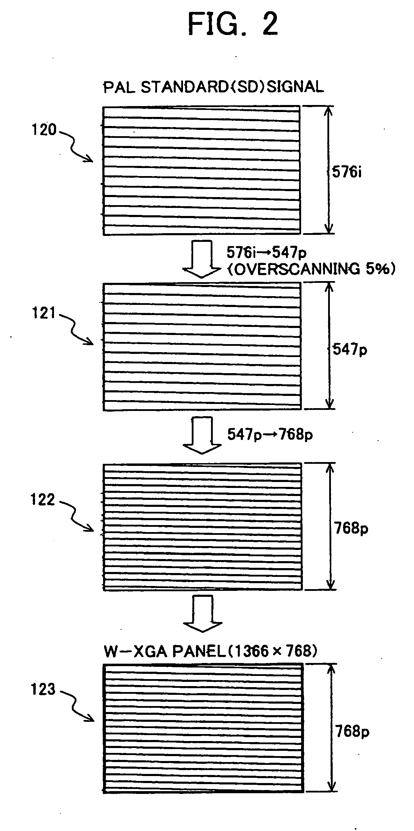

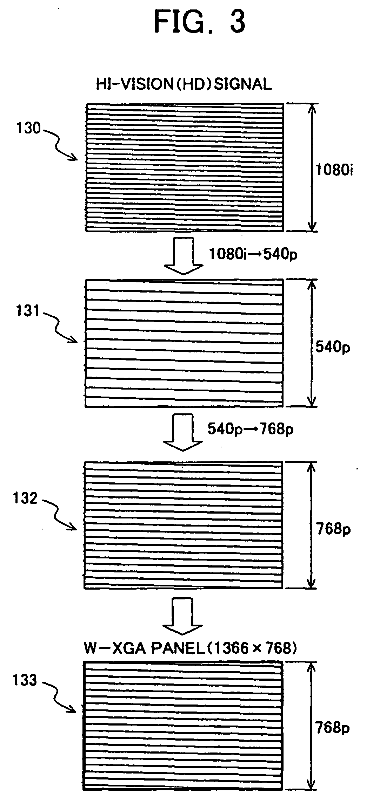

Fig. 1 is a diagram of a main part of a configuration of the video display device for the video source of the PAL system; Fig. 2 is a diagram for description of the scaling of a PAL-system standard (SD) video signal; and Fig. 3 is a diagram for description of the scaling of a Hi-vision (HD) video signal. Fig. 1 shows an example of the video display device for displaying the PAL-system video source or the Hi-vision signal on a 16:9-type W-XGA liquid crystal display panel complying with the PC standard, and description will be made of the scaling at the time of displaying the PAL-system standard video signal or Hi-vision video signal on this video display device, with reference to Figs. 2 and 3.

A video display device 100 shown as an example in Fig. 1 comprises an input switching portion 11 that inputs the video signal by switching among the video signals a, b, and c from a plurality of video sources, an AD converter 12 that converts an analog signal to a digital signal, a scaling-use frame memory 13f, a video signal converting portion 14t as a scaler that performs video signal converting processing such as the scaling and an IP conversion, an image quality emphasis correcting portion 15 that performs image quality emphasis correcting processing, an OSD (On Screen Display) control portion 16 that controls an on-screen signal, an OSD mixing portion 17 that mixes the on-screen signal, a γ-correcting portion 18 that performs a γ-correction, a liquid crystal controller 19 that controls a liquid crystal panel, a liquid crystal panel 20, a gate driver 21, and a source driver 22.

The video signal converting portion 14t, in addition to performing the video signal converting processing such as the IP conversion, performs, using the scaling-use frame memory 13f, the vertical scaling of an interlaced video signal of 576 scanning lines (hereinafter, 576i signal) to a progressive signal of 768 scanning lines (hereinafter, 768p signal) in the case of the PAL video signal and of an interlaced video signal of 1080 scanning lines (hereinafter, 1080i signal) to the 768p signal in the case of the Hi-vision signal. In the case of displaying the NTSC-system video source or displaying the PAL-system video signal on the display panel complying with the PC display standard, the scaling-use frame memory 13f is required as a working memory at the time of scaling.

Description will be made of the vertical scaling of the PAL-system standard video signal, with reference to Fig. 2. In Fig. 2, reference numeral 123 indicates a typical representation of pixel rows of a 16:9-type W-XGA (1366 dots × 768 dots) display panel (corresponding to the liquid crystal panel 20 of Fig. 1) and this display panel is hereinafter referred to simply as a W-XGA panel.

Firstly, the 576i signal 120 is converted to a progressive signal 121 of 547 scanning lines. Thus generated signal is hereinafter referred to simply as a 547p signal 121. Here, the reason why the number of the scanning lines is changed from interlaced 576 lines to progressive 547 lines is that the signal of one field, after the processing of increasing one line to two lines by a line memory, has been converted to a 576p signal and furthermore, 29 lines thereof equivalent to 5 % overscanning have been cut. Next, the 547p signal 121 is converted by the vertical scaling to a progressive signal 122 of 768 scanning lines (768p signal). The 768p signal 122, whose number of scanning lines is 768, may be displayed on the W-XGA panel having 768 pixel rows. Since the 576i video signal 120 is of 4:3 type, the scaling in the horizontal direction as well is required to display the signal on a 16:9-type display panel.

Then, description will be made of the vertical scaling of the Hi-vision (HD) video signal, with reference to Fig. 3. In Fig. 3, reference numeral 133 indicates a typical representation of the pixel rows of the W-XGA panel. Firstly, the 1080i signal 130 is converted to a progressive signal 131 of 540 scanning lines. Thus generated signal is hereinafter referred to simply as a 540p signal 131. Here, the reason why the number of scanning lines is decreased from interlaced 1080 lines to progressive 540 lines is that the signal of either one of odd-number field or even-number field is taken as the signal of one frame. Next, the 540p signal 131 is converted by the vertical scaling to a progressive signal 132 of 768 scanning lines (768p signal). The 768p signal 132, whose number of scanning lines is 768, may be displayed on the W-XGA panel having 768 pixel rows. Since the 1080i video signal is of 16:9 type, no scaling in the horizontal direction is required to display the signal on the 16:9-type display panel.

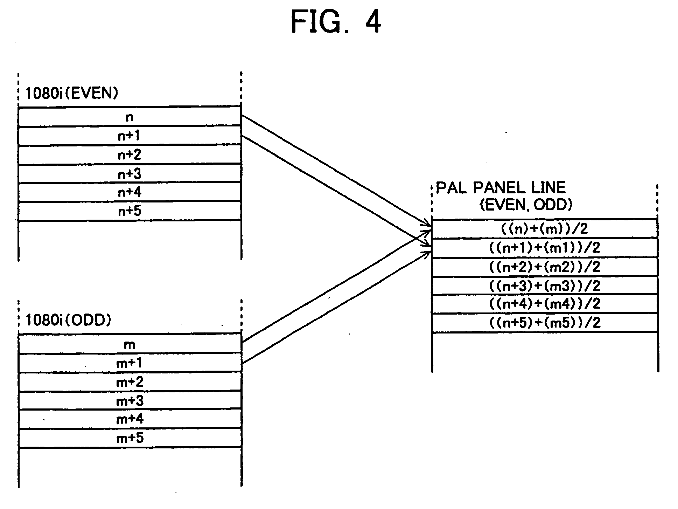

Description will be made of the vertical scaling of the 1080i signal, with reference to Fig. 4. The vertical scaling of the Hi-vision signal, in the case of not employing the method of taking the signal of either one of the even-number field or the odd-number field as the signal of one frame, is executed using the frame memory 13f of Fig. 1. In generating the 540p signal 131 as shown in Fig. 3, the odd-number field and the even-number field of the 1080i signal are mixed on the frame memory 13f. Thus generated 540p signal is, for example, an average value of both fields. If it is assumed that the even-number filed is composed of 540 scanning lines of n to n+539 and the odd-number field is composed of 540 scanning lines of m to m+539, the generated 540p signal is composed of ((n)+(m))/2, ((n+1)+(m+1))/2, ((n+2)+(m+2))/2, ... , from the top pixel row downward. Namely, contents of display line in the 540p signal are average of each line of the even-number field and each line of the odd-number field of the 1080i signal. Here, (n+1), etc., indicate the video signal at respective lines.

As for conventional technology regarding the video display device, a video signal processing circuit is proposed that is equipped with a bel table having the amplitude specified by the SECAM (sequential a memoir) system corresponding to a color difference signal and is adaptable to the PAL system, the NTSC system and the SECAM system (see, for example, Japanese Laid-Open Patent Publication No. 2002-185975). A liquid crystal display device is also proposed that controls, based on the cycle of a horizontal synchronous signal, the phase of a gate pulse so that a holding period of the voltage stored at a signal line may be constant, thereby eliminating a difference in display quality between the NTSC system and the PAL system (see, for example, Japanese Laid-Open Patent Publication No. H5-127621).

EP-A-1 404 130 discloses a method and an apparatus for processing a video signal mixed with an additional image signal.

### DISCLOSURE OF THE INVENTION

However, in such conventional W-XGA display panels, at the time of displaying the PAL-system video source or the Hi-vision signal, the vertical scaling must be performed. The vertical scaling as used here is the processing of creating a new horizontal scanning signal by performing an operation such as adding/averaging, at a predetermined ratio, of horizontal scanning line signals adjacent to each other and a problem arises that the signal is invariably blurred as compared with the original video signal.

In performing such a vertical scaling, there has been a disadvantage that since at least one frame of image must be spread on a memory, a frame memory is required and at the same time, the configuration of a scaler becomes complicated. For example, displaying of the PAL video signal on the W-XGA display panel requires, as shown in Fig. 1, the scaling-use frame memory 13f and the video signal converting portion 14t of a comparatively large circuit scale that converts the image using the scaling-use frame memory 13f, which contribute to an increase in cost.

Recent video display device are required, in whichever system of the NTSC system, the PAL system, etc., to display not only the conventional video signal with the aspect ratio of 4:3 but also a wide-system video signal with the aspect ratio of 16:9. It is appropriate to make the aspect ratio of the display panel to 16:9 by making the number of pixels in the horizontal direction 16/9 times as many as the number of pixels in the vertical direction. Conventionally, there has been no PAL-system display panel complying with such a wide-type video signal with the aspect ratio of 16:9. For this reason, a greater scaling is required, which brings about the effect on the image quality and the cost increase as mentioned above.

Further, since the VGA resolution of the PC is close to the number of scanning lines on which the display signal of the NTSC video signal is present, it is comparatively easy to match the display signal with panel pixels in the case of NTSC signal. However, in the case of the PAL signal or the SECAM signal, whose number of scanning lines is different from that of the NTSC signal, the vertical scaling using the frame memory is required.

For this reason, an apparatus is required that performs the display by matching the display signal to the pixel through the display panel whose number of pixels in the vertical direction agree with the PAL-system or SECAM-system video signal. This situation applies not only to display panels such as the liquid crystal panel and the plasma display but also to any dot-matrix display device and, for example, a projector and a rear-projection-type monitor, TV, etc., are in the same situation.

The present invention was conceived in view of the situation mentioned above and it is the object of the present invention to provide a video display device capable of displaying a video signal of a specified video system such as the PAL system or SECAM system, etc., by making the signal the most suitable form for a dot-matrix display device.

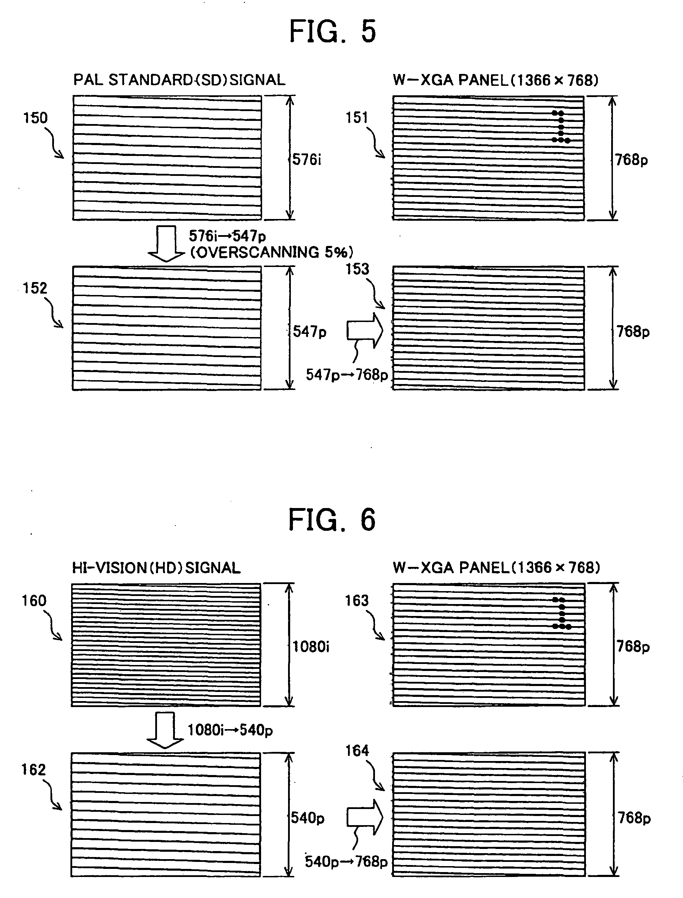

At the OSD mixing portion 17 shown in Fig. 1, the on-screen signal is mixed to (superimposed over) the 768p signal. The video signal over which the on-screen signal is superimposed is displayed on the liquid crystal panel 20. The on-screen signal is displayed as, for example, character information "1" indicated by reference numeral 151 of Fig. 5. In this case, since the OSD mixing portion 17 is arranged after the video signal converting portion 14t and the scaling processing involving a between-line calculation is not performed at a stage subsequent to the OSD mixing portion 17, unblurred OSD character information can be displayed at a desired location of the video signal.

Fig 6 is a diagram for description of the OSD display at the time of displaying the Hi-vision (HD) video signal on the W-XGA panel as shown in Fig. 3. An interlaced video signal of 1080 scanning lines (1080i video signal) indicated by reference numeral 160 of Fig. 6 is converted to a progressive signal of 540 scanning lines (540p signal) indicated by reference numeral 162 of Fig. 6 and this 540p signal is converted to a progressive signal of 768 scanning lines (768p signal) indicated by reference numeral 164 of Fig. 6. These series of processing is executed by the video signal converting portion 14t of Fig. 1.

Then, at the OSD mixing portion 17 of Fig. 1, the on-screen signal is mixed to (superimposed over) the 768p signal. The video signal over which the on-screen signal is superimposed is displayed on the liquid crystal panel 20. The on-screen signal is displayed as, for example, character information "1" indicated by reference numeral 163 of Fig. 6. In this case, since the OSD mixing portion 17 is arranged after the video signal converting portion 14t and the scaling processing is not performed at a stage subsequent to the OSD mixing portion 17, unblurred OSD character information can be displayed at a desired location of the video signal.

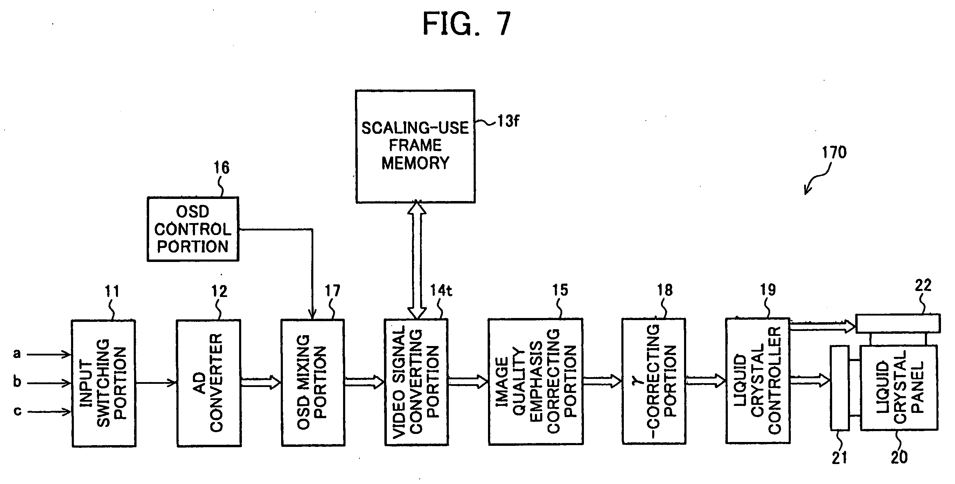

A video display device 170 shown as an example in Fig. 7 represents the liquid crystal display device that displays the PAL signal on the W-XGA panel as described above, wherein the OSD mixing portion 17 that superimposes the OSD on-screen signal is disposed at a stage prior to the video signal converting portion 14t that performs the scaling. In this case, the OSD mixing portion 17 is arranged between the AD converter that converts an input video signal to a digital signal and the video signal converting portion 14t that performs the scaling.

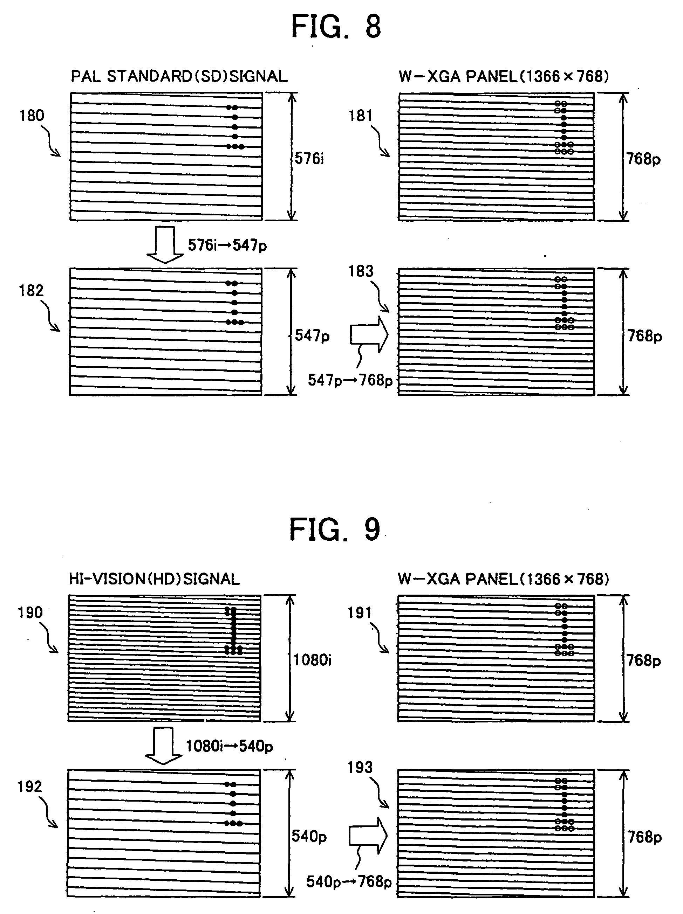

Fig. 8 is a diagram for description of the OSD display at the time of displaying the PAL-system standard (SD) video signal on the W-XGA panel, with a configuration shown in Fig. 7.
In the example of Fig. 8, an interlaced video signal of 576 scanning lines (576i video signal) is converted from an analog signal to a digital signal by the AD converter 12 and thereafter, the on-screen signal is superimposed over the digital video signal at the OSD mixing portion 17. Here, the on-screen signal is superimposed, for example, as character information "1" indicated by reference numeral 180 of Fig. 8.

Then, the video signal converting portion 14t converts the video signal over which the on-screen signal is superimposed to a progressive signal of 547 scanning lines (547p signal) indicated by reference numeral 182 of Fig. 8 and converts, by the scaling, this 547p signal to a progressive signal of 768 scanning lines (768p signal) indicated by reference numeral 183 of Fig. 8.

In this case, since, before the scaling by the video signal converting portion 14t, the on-screen signal has been superimposed by the OSD mixing portion 17, the superimposed character information is disordered by the scaling involving the between-line calculation and the character is blurred when the signal has become the 768p signal.

The blurred character described above occurs also in the case of displaying the Hi-vision (HD) video signal on the W-XGA panel. At the OSD mixing portion 17, for example, the character information "1" indicated by reference numeral 190 of Fig. 9 is superimposed as the on-screen signal over the 1080i video signal converted to a digital signal by the AD converter 12. Then, the video signal converting portion 14t converts the video signal over which the on-screen signal is superimposed to a progressive signal of 540 scanning lines (540p signal) indicated by reference numeral 192 of Fig. 9 and converts, by the scaling, this 540p signal to a progressive signal of 768 scanning lines (768p signal) indicated by reference numeral 193 of Fig. 9.

In this case as well, since, before the scaling by the video signal converting portion 14t, the on-screen signal has been superimposed by the OSD mixing portion 17, the superimposed character information is disordered by the scaling involving the between-line calculation and the character is blurred when the signal has become the 768p signal. Reference numeral 183 of Fig. 8 and reference numeral 193 of Fig. 9 only schematically indicate that the character is blurred and do not represent the number or density of dots accurately.

As described above, a conventional liquid crystal display device that performs the scaling involving the between-line calculation has a restriction that, to superimpose an unblurred on-screen signal at a desired location of an input video signal, the on-screen signal must be superimposed after the video signal converting portion that performs the scaling. When the on-screen signal is superimposed before performing the scaling, there arises a problem that characters, etc., of the on-screen signal are blurred and the visibility characteristics deteriorate because a line conversion is made by the subsequent scaling processing.

The restriction in the location of the superimposition of the OSD on-screen signal means the restriction on the freedom of circuit designing. If the on-screen signal may be superimposed, for example, before the AD converter, an inexpensive analog character superimposing IC may be applied and therefore, an effect may be obtained of simplification of the circuit and cost reduction of the apparatus.
The above objects are solved by the claimed matter according to the independent claims.

A video display device of the present invention is a video display device that displays a video signal of a specified video system on a dot-matrix display device, wherein the display device has the number of pixels in the vertical direction set at the number of pixels smaller by the number equivalent to overscanning than the number of effective scanning lines of the video signal, has the scanning line of the video signal and the pixel in the vertical direction of the display device corresponding to each other one to one, and is optimized for display of the video signals.

The specified video system may be any one of the 576i, 576p, 1080i, and 1080p broadcasting systems, and may be the PAL or SECAM system.

In another video display device of the present invention, the ratio of the size in the horizontal direction to the size in the vertical direction of the display device is 4:3 or 16:9.

In another video display device of the present invention, the number of pixels in the vertical direction of the display device is preferably 540 with the number of pixels in the horizontal direction of the display device being 720 or 960. An interlaced video signal of 1080 effective scanning lines may be scaled to the number of scanning lines equal to one half of the number of effective scanning lines for display on the display device, or a progressive video signal of 720 effective scanning lines may be scaled to the number of scanning lines equal to 3/4 of the number of the effective scanning lines for display on the display device.

In another video display device of the present invention, a display portion of the display device has a diagonal length of 17 inches or more.

Another video display device of the present invention comprises a video signal input portion that inputs an interlaced video signal having a predetermined number of scanning lines; a video signal converting portion that converts the scanning lines to be used for display out of the video signal from the video signal input portion to a progressive video signal having the number of scanning lines equal to the reciprocal of an integer of the number of scanning lines for one frame of such scanning lines; and a matrix display panel that inputs the video signal from the video signal converting portion and displays a progressive video, wherein an OSD mixing portion that superimposes an on-screen signal for OSD display over the video signal is disposed at a stage prior to the video signal converting portion.

Another video display device of the present invention comprises a video signal input portion that inputs an interlaced video signal having a predetermined number of scanning lines; an AD converter that converts the video signal to a digital video signal; a video signal converting portion that converts the scanning lines to be used for display out of the digital video signal to a progressive digital video signal having the number of scanning lines equal to the reciprocal of an integer of the number of scanning lines for one frame of such scanning lines; and a matrix display panel that inputs the video signal from the video signal converting portion and displays a progressive video, wherein an OSD mixing portion that superimposes an on-screen signal for OSD display over the video signal is disposed at a stage prior to the AD converter.

Another video display device of the present invention comprises a video signal input portion that inputs an interlaced video signal having a predetermined number of scanning lines; a video signal converting portion that converts the scanning lines to be used for display out of the video signal from the video signal input portion to a progressive video signal having the number of scanning lines equal to the reciprocal of an integer of the number of such scanning lines; a matrix display panel that inputs the video signal from the video signal converting portion and displays a progressive video; a means of separating a character data signal from the input video signal; a means of generating a character signal from the character data signal; a character signal superimposing portion that superimposes the character signal over the video signal; and an OSD mixing portion that superimposes an on-screen signal for OSD display over the video signal, wherein the character signal superimposing portion is disposed at a stage prior to the video signal converting portion and the OSD mixing portion is disposed at a stage subsequent to the character signal superimposing portion.

Another video display device of the present invention comprises a video signal input portion that inputs an interlaced video signal having a predetermined number of scanning lines; an AD converter that converts the video signal to a digital video signal; a video signal converting portion that converts the scanning lines to be used for display out of the digital video signal to a progressive digital video signal having the number of scanning lines equal to the reciprocal of an integer of the number of such scanning lines; a matrix display panel that inputs the video signal from the video signal converting portion and displays a progressive video;
a means of separating a character data signal from the input video signal; a means of generating a character signal from the character data signal; a character signal superimposing portion that superimposes the character signal over the video signal; and an OSD mixing portion that superimposes an on-screen signal for OSD display over the video signal, wherein the character signal superimposing portion is disposed at a stage prior to the AD converter and the OSD mixing portion is disposed at a stage subsequent to the AD converter.

In another video display device of the present invention, the video signal converting portion converts the video signal to the video signal having 540 scanning lines as the video signal to be used for the display and thus a converted video signal having 540 scanning lines is displayed on the matrix display panel having 540 pixel rows. The interlaced video signal is preferably a video signal of the 576i or 1080i broadcasting system, and is preferably PAL-system or SECAM-system.

In another video display device of the present invention, the video signal converting portion converts the video signal to the video signal having 480 scanning lines as the video signal to be used for the display and thus a converted video signal having 480 scanning lines is displayed on the matrix display panel having 480 pixel rows. The interlaced video signal is preferably a video signal of the 480i broadcasting system, and the interlaced video system is preferably the NTSC system.

As described above, the present invention enables realizing the video display device having the number of pixels in the vertical direction corresponding to the number of scanning lines of the video signal to be displayed.
The present invention, by displaying the horizontal scanning line signal matched to the pixels of the panel, also enables eliminating the necessity of the scaling or simplifying the scaling and preventing as much effect by the scaling as possible on the image quality.
The present invention also enables simplified scaling using a line memory and therefore, the cost reduction.
The present invention, by using the display panel having the number of pixels in the vertical direction corresponding to the number of scanning lines of the video signal to be displayed, also enables superimposing the on-screen signal for the OSD display before the video signal processing portion. This enables easily performing the OSD display at a desired location of the display signal even before the video signal processing portion, increasing the freedom of circuit designing, and performing the OSD display of the video signal with a low-cost, simplified circuit.

### BRIEF DESCRIPTION OF THE DRAWINGS

[Fig. 1] Fig. 1 is a diagram of a main part of a configuration of a conventional video display device for a PAL-system video source.
[Fig. 2] Fig. 2 is a diagram for description of video signal converting processing of a PAL standard video signal in a conventional W-XGA-type matrix display device.
[Fig. 3] Fig. 3 is a diagram for description of the video signal converting processing of a Hi-vision video signal in the conventional W-XGA-type matrix display device.
[Fig. 4] Fig. 4 is a diagram for description of vertical scaling of a 1080i signal in the conventional W-XGA-type matrix display device.
[Fig. 5] Fig. 5 is a diagram for description of OSD display at the time of displaying the PAL-system standard (SD) video signal on the W-XGA panel.
[Fig. 6] Fig. 6 is a diagram for description of the OSD display at the time of displaying the Hi-vision (HD) video signal on the W-XGA panel.
[Fig. 7] Fig. 7 is a diagram of an example of arranging an OSD mixing portion that superimposes an OSD on-screen signal at a stage prior to a video signal converting portion that performs the scaling.
[Fig. 8] Fig. 8 is a diagram for description of the OSD display at the time of displaying the PAL-system standard (SD) video signal on the W-XGA panel.
[Fig. 9] Fig. 9 is a diagram for description of the OSD display at the time of displaying the Hi-vision (HD) video signal on the W-XGA panel.
[Fig. 10] Fig. 10 is a diagram of a main part in one configuration example of a video display device according to one embodiment of the present invention.
[Fig. 11] Fig. 11 is a diagram for description of a video signal converting processing example at the time of displaying the PAL-system video signal in the video display device of Fig. 10.
[Fig. 12] Fig. 12 is a diagram for description of a method of assigning the PAL video signal (even-number field) to respective lines of a liquid crystal panel.
[Fig. 13] Fig. 13 is a diagram for description of a method of assigning the PAL video signal (odd-number field) to respective lines of the liquid crystal panel.
[Fig. 14] Fig. 14 is a diagram for description of a video signal converting processing example at the time of displaying the 1080i signal in the video display device of Fig. 10.
[Fig. 15] Fig. 15 is a diagram for description of a method of assigning the 1080i signal (even-number field) to respective lines of the liquid crystal panel.
[Fig. 16] Fig. 16 is a diagram for description of a method of assigning the 1080i signal (odd-number field) to respective lines of the liquid crystal panel.
[Fig. 17] Fig. 17 is a diagram for description of a positional relationship between the 1080i signal and 540 lines at the time of displaying the 1080i signal on the liquid crystal panel of 540 lines.
[Fig. 18] Fig. 18 is a diagram of a circuit configuration example of the video display device of Fig. 10.
[Fig. 19] Fig. 19 is a diagram for description of the OSD display at the time of displaying the PAL-system standard (SD) video signal on a 16:9-type wide Euro panel of European standard.
[Fig. 20] Fig. 20 is a diagram for description of the OSD display at the time of displaying the Hi-vision (HD) video signal on the 16:9-type wide Euro panel of European standard.
[Fig. 21] Fig. 21 is a diagram of a main part in one configuration example of the video display device according to other embodiment of the present invention.
[Fig. 22] Fig. 22 is a diagram of a main part in one configuration example of the video display device according to other embodiment of the present invention.
[Fig. 23] Fig. 23 is a diagram of a main part in one configuration example of the video display device according to other embodiment of the present invention.
[Fig. 24] Fig. 24 is a diagram of a main part in one configuration example of the video display device according to other embodiment of the present invention.

### PREFERRED EMBODIMENTS OF THE INVENTION

A video display device according to one embodiment of the present invention is an apparatus that displays a PAL-system or SECAM-system video signal on a dot matrix display device that is optimized for display of the PAL-system or SECAM-system video signal. In the present invention, this optimization is achieved with the display device designed so that (1) the number of pixels in the vertical direction is set at the number of pixels smaller by the number of pixels equivalent to overscanning than the number of effective scanning lines of the PAL-system or SECAM-system video signal, (2) the scanning line of the video signal and the pixel in the vertical direction of the display device correspond to each other one to one, and (3) the ratio of the size in the horizontal direction to the size in the vertical direction of the display device is 4:3 or 16:9.

When the display device is a color display device, one pixel is composed of three colors of red, blue, and green and it is preferable that one pixel is of almost equal size in the horizontal and vertical directions and in the following, description of the number of pixels is based on this configuration. Therefore, if one pixel is of a configuration different from this, then it is desirable to optimize the display device for display of the PAL-system or SECAM-system video signal so that it can be suitable for such a configuration.

The display device applicable to the video display device according to the present invention is not limited to the display panels such as a liquid crystal panel and a plasma display but may be any display device so long as it is a dot-matrix display device, and for example, may be a front-projecting projector or a rear-projecting projector such as a rear-projection TV. In the following, description will be made taking the display panels of the liquid crystal panel, etc., as example of the display device for the purpose of simplification of the description.

In the case of employing the display panel having the number of pixels in the vertical direction (also called vertical resolution or number of lines) optimized for the PAL or SECAM signal of 540 effective scanning lines, displaying a 1080i signal having a greater number of effective scanning lines on such a display panel requires vertical scaling using a frame memory because of downscaling of the resolution, and an increase in circuit scale, a cost increase and an increase in driving power are unavoidable. Furthermore, in the case of displaying the 1080i signal in 540 lines (or the number of lines close thereto) without using the frame memory, such a display is possible because both even-number field and odd-number field of the 1080i have 540 lines but an image displayed on the display panel is blurred in the vertical direction because the odd-number field is displayed at the same position as that of the even-number field. Such a problem is not limited to the display panel having the number of pixels in the vertical direction optimized for the PAL or SECAM signal but likewise arises in the case of displaying an interlaced video signal having a predetermined number of effective scanning lines on the display panel having the vertical resolution equal to or close to one half of such a number of effective scanning lines.

Therefore, the following description will take as example the video display device that does not have the video information blurred due to the vertical scaling and does not cause an increase in the circuit scale, the cost and the driving power, at the time of displaying the interlaced video signal having a predetermined number of effective scanning lines such as the 1080i signal on the display panel having the vertical resolution equal to or close to one half of such a number of effective scanning lines.

The video display device given as an example here is a device capable of displaying an interlaced video signal having a predetermined number of effective scanning lines, provided with the display panel having the vertical resolution equal to or close to one half of such a number of effective scanning lines and the scaler that performs the scaling of an input video signal using a line memory. And the device is designed to input and display mainly the video signal suitable for such vertical resolution. For example, when the 1080i signal is applied as the interlaced signal having such a predetermined number of effective scanning lines, the display panel having the vertical resolution equal to or close to 540 lines may be applied. The display panel in this example may be the display panel optimized for the PAL-system or SECAM-system video signal and in such a case, the video display device, like the video display device of the present invention, is a device designed for the purpose of displaying mainly the PAL signal or the SECAM signal and enabled to display the 1080i signal without using the frame memory and without causing the blurred video.

The video display device according to the present embodiment displays one field of the interlaced video signal having the predetermined number of effective scanning lines mentioned above on the display panel without performing scaling by the scaler and displays the other field after performing the scaling of averaging between adjacent horizontal scanning lines by the scaler. This scaler is a scaler using the line memory and is capable of easily scaling a screen size.

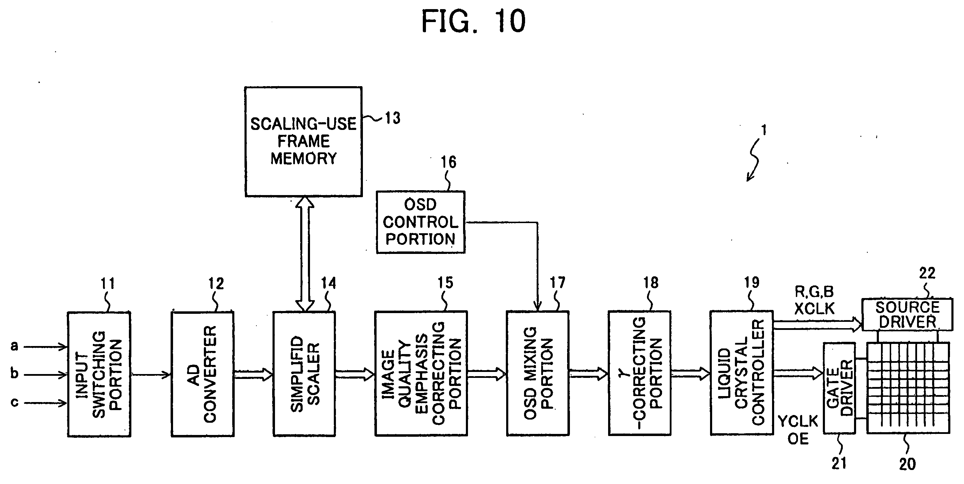

Fig. 10 is a diagram of a main part in one configuration example of the video display device according to one embodiment of the present invention. In the following, description will be made of the video display device according to the present embodiment, taking, as example, a device capable of displaying an interlaced video signal having 1080 effective scanning lines (1080i signal) and provided with the liquid crystal panel for the PAL-system video source as the display panel having the vertical resolution equal to or close to one half of such number of effective scanning lines. However, as described above, the video display device according to the present invention is likewise applicable to other matrix display device such as the plasma panel or to the device designed for the video signal of the SECAM or other system. The video display device according to the present invention is also applicable to the PAL-system or SECAM-system broadcast receiving apparatus, etc, that are capable of receiving and displaying the HD signal such as the 1080i signal as well.

A video display device 1 shown as example in Fig. 10 comprises an input switching portion 11, an AD converter 12, a scaling-use line memory 13, a simplified scaler 14, an image quality emphasis correcting portion 15, an OSD control portion 16, an OSD mixing portion 17, a γ-correcting portion 18, a liquid crystal controller 19, a liquid crystal panel 20, a gate driver 21, and a source driver 22. The configuration of, and connecting relationship among, portions making up the video display device 1 are not limited to this.

The input switching portion 11 inputs the video signal by switching among the video signals a, b, and c from a plurality of video sources. The video signal of, for example, the PAL-system, NTSC-system, HD-system, etc. having a predetermined number of scanning lines corresponds to the video signal to be input here and either one of these signals is selected and sent to a subsequent stage. Tuning of the video signal of respective systems is made by a tuner and an arbitrary signal is selected by the input switching. Given here is an example of the video signal being an analog signal and the AD converter 12 converts the analog signal selected by switching to a digital signal.

The simplified scaler 14 performs video signal converting processing such as IP conversion using the scaling-use line memory 13 and converts the video signal to data of the resolution corresponding to the size of the liquid crystal panel 20 by performing processing such as a simplified scaling to be described later using the scaling-use line memory 13. While a clock frequency differs depending on the video signal to be input, the clock frequency as well is changed in accordance with the data conversion. Not only in the case of displaying the PAL standard signal but also in the case of displaying the NTSC standard signal, the PAL-system displaying may be performed with the simplified scaler 14 using the scaling-use line memory 13. In the video display device 1, in the case of displaying the HD-system video signal (1080i signal) as well, the PAL-system displaying is performed using the simplified scaler 14 and the scaling-use line memory 13.

The image quality emphasis correcting portion 15 performs image quality emphasis correcting processing such as the video edge emphasis by a digital filter, using several pixels in the line direction only or at right and left, top and bottom. The OSD control portion 16 controls to generate an on-screen signal (GUI signal) from built-in font data or bit-map data. The OSD mixing portion 17 mixes the on-screen signal representing fonts, graphics, etc., for superimposing over the screen. The γ-correcting portion 18 adjusts the tone of the video by changing γ-characteristics of the video according to the γ-table. The liquid crystal controller 19 controls the liquid crystal panel 20 by changing the video data to the signal that drives the liquid crystal panel 20 and outputting it to the gate driver 21 and the source driver 22. The gate driver 21 determines which line to be written by controlling a gate signal of an active matrix of the liquid crystal panel 20. The source driver 22 controls a source signal of the active matrix of the liquid crystal panel 20.

The liquid crystal panel 20 is a matrix display panel having an X-Y matrix structure with pixels equally spaced in vertical and horizontal directions to which a scaled video signal is input and which displays a progressive video. The liquid crystal panel 20 has the number of pixels in the vertical direction corresponding to the number of horizontal scanning lines of the PAL system on which the display signal is present and has the number of pixels in the horizontal direction, for example, corresponding to the number at the ratio of 4/3 of the number of pixels in the vertical direction. The control in the X direction is performed by the source driver 22 and the control in the Y direction is performed by the gate driver 21. A RGB signal to be written to the liquid crystal and a liquid crystal drive clock (XCLK) are input to the source driver 22. An OE signal for controlling whether to write and a YCLK for shifting a writing line are input to the gate driver 21. When the PAL signal (already converted to 540p) is input, at the start of displaying one field, firstly the YCLK is input by one clock, a first line is specified as the writing line, the OE becomes active, and the state turns to a writable state. One line of the RGB signal is input from the source driver 22 and data is written to the first line specified by the gate driver 21. After one line is written, the YCLK is input by one clock, and the next line is specified. The RGB signal is written. Then, this process continues until all lines are written.

In the following, description will be made of video signal converting processing at the simplified scaler 14 of the video display device configured as described above.

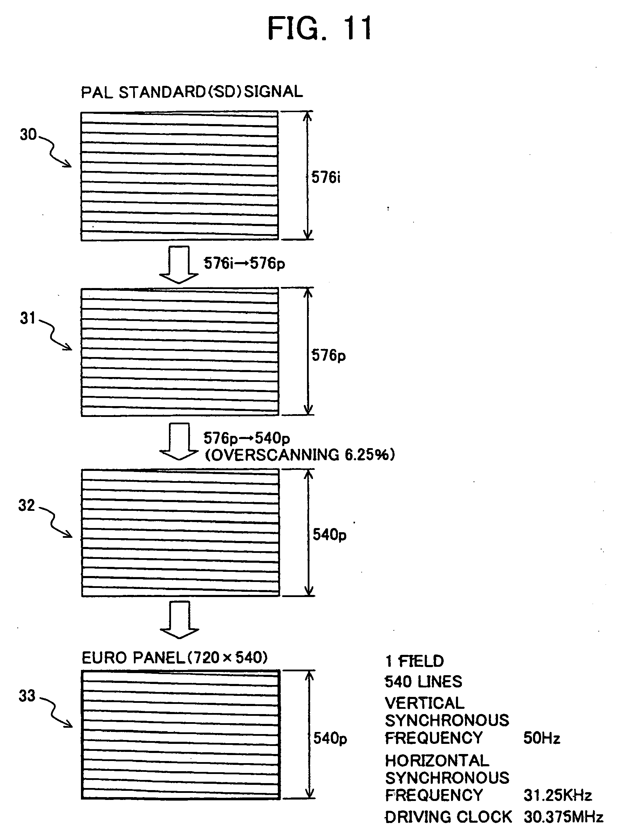

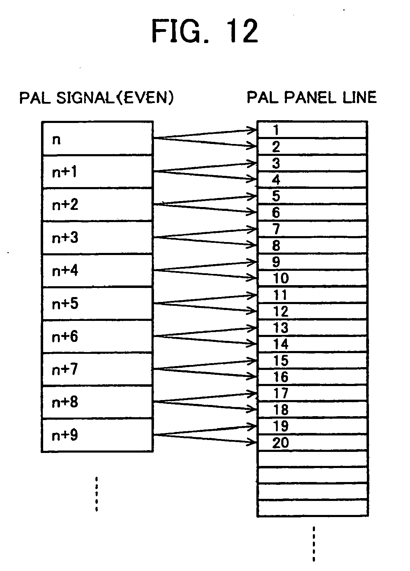

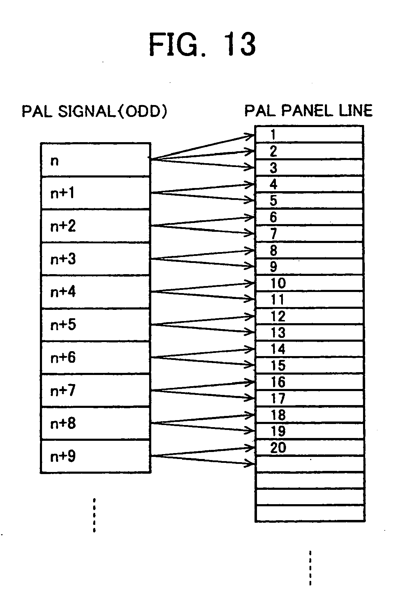

Fig. 11 is a diagram for description of a video signal converting processing example at the time of displaying the PAL-system video signal in the video display device of Fig. 10; Fig. 12 is a diagram for description of a method of assigning the PAL video signal (even-number field) to respective lines of the liquid crystal panel; and Fig. 13 is a diagram for description of a method of assigning the PAL video signal (odd-number field) to respective lines of the liquid crystal panel.

The PAL-system (or SECAM-system) video signal is the interlaced video signal of 625 scanning lines, out of which 576 lines are the scanning lines of the video signal. To display this video signal (576i signal) 30 on the liquid crystal panel 20 composed of 540 pixel rows, firstly one field of the 576i signal 30 undergoes the IP conversion using the line memory 13 and is converted to a progressive signal of 576 scanning lines (hereinafter, 576p signal) 31. This IP conversion example represents a simple vertical scaling of the 576i signal 30, using the scaling-use line memory 13, to increase the number of scanning lines of the field from 288 lines to the double 576 lines. Here, while the interlaced signal is changed to the progressive signal, there is no change in the number of scanning lines and therefore, no complicated vertical scaling is required.

The number of effective scanning lines of the 576i signal 30 is 540 lines (270 lines for one field) and the number of effective scanning lines of the 576p signal 31 is also 540 lines. Therefore, overscanning processing must be performed to limit the number of scanning lines to be input to the line memory 13 to the number of scanning lines corresponding to the liquid crystal panel 20 (540 lines). By the overscanning processing, the 576p signal 31 is converted to a progressive signal of 540 scanning lines (540p signal) 32. The number of scanning lines is decreased from 576 lines to 540 lines because of cutting 6.25 % % of overscanning and the vertical scaling is not required at this stage, either.

The 540p signal 32 may be displayed on the liquid crystal display 20 composed of 540 pixel rows, as indicated by reference numeral 33 in Fig. 11. Reference numeral 33 indicates a typical representation of pixel rows of a 4:3-type display panel of European standard (720 dots × 540 dots) and this display panel is hereinafter referred to simply as a Euro panel. The video display device according to the present invention is not limited to provide with this Euro panel but even a display panel of the ratio close to that of the Euro panel may be applied. The 576i signal 30 is of 4:3 type and therefore, in displaying this signal on the 4:3-type Euro panel, the horizontal scaling is not required, either.

As seen above, the IP converting processing and the overscanning processing are applied to the PAL-system video signal using the line memory 13. Here, an example of inputting the video signal corresponding to each scanning line to a plurality of pixel rows of the liquid crystal panel 20 is shown as the simplest IP converting processing example. In this IP converting example, in the case of the video signal of the even-number field, the video signal on each scanning line is displayed on two pixel rows of the liquid crystal panel 20 as shown in Fig. 12 and in the case of the video signal of the odd-number field, because of the necessity of displaying the video signal lower by one line, the video signal on the first scanning line must be displayed on three pixel rows of the liquid crystal panel 20 but, other than this, the video signal on each scanning line is displayed on two pixel rows of the liquid crystal panel 20 as shown in Fig. 13. From the fact that the video signal on the same scanning line is supplied to three pixel rows in the odd-number field, the line memory 13 used in this IP conversion is of two concurrently readable/writable lines and the number of lines is doubled to 576 lines by taking in one line of 288 lines in the 576i signal and after the taking-in, outputting it at a double clock frequency. At this moment, the horizontal period of one line is set at a half of that of the 576i signal.

Description will be made of the panel driving frequency in the liquid crystal panel 20, taking the Euro panel (720 panel horizontal dots and 540 panel vertical dots) as example. The PAL-system video signal is composed of 270 lines for one field and its vertical synchronous frequency is 50 Hz and its horizontal synchronous frequency is 15.62 kHz. On the other hand, the liquid crystal panel 20 suitable for the PAL system including the Euro panel is configured to display one field by 540 lines, its vertical synchronous frequency is 50 Hz and its horizontal synchronous frequency is 31.25 kHz, and the panel driving frequency (driving clock) is 30.375 MHz. The vertical total clock number is 625.

The panel driving frequency is determined by the horizontal synchronous frequency and the horizontal total clock number. The horizontal total clock number is the number of driving clocks for one horizontal line including the flyback period and is 972 clocks in the case of the liquid crystal panel 20 suitable for the PAL system. At the time of the PAL signal (at the time of 576p), since the horizontal synchronous frequency is 31.25 kHz, the panel driving frequency is as follows: 31.25 kHzx972=30.375 MHz.

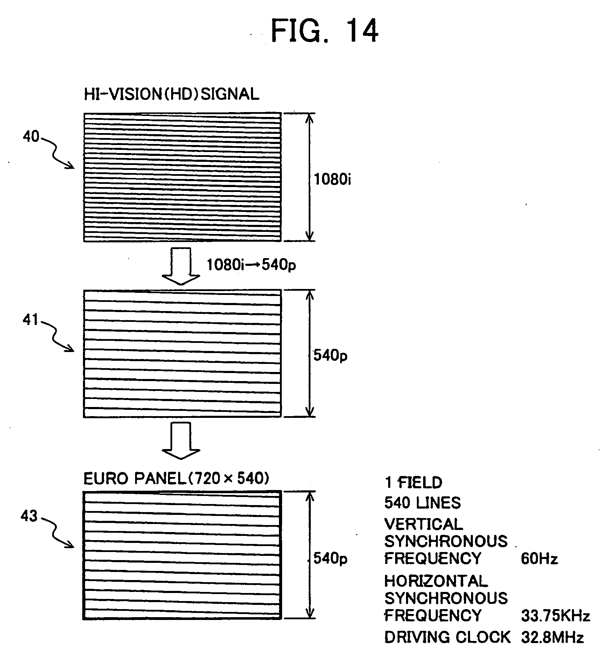

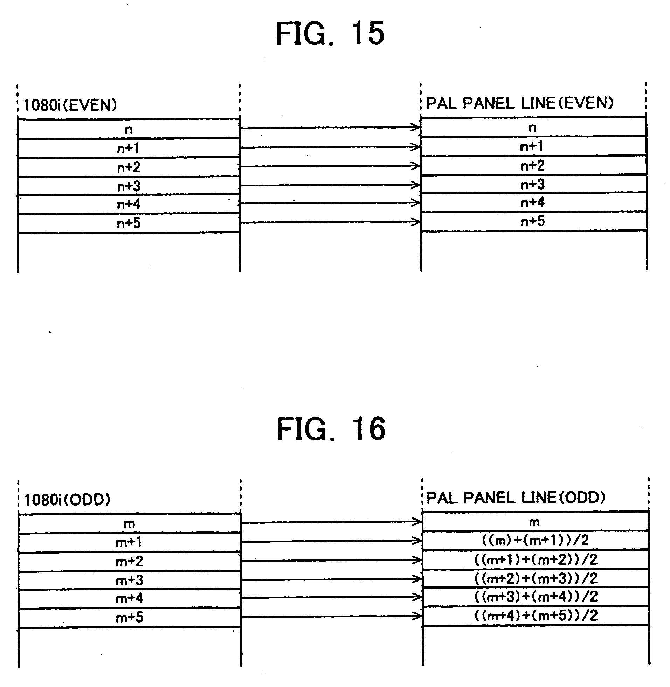

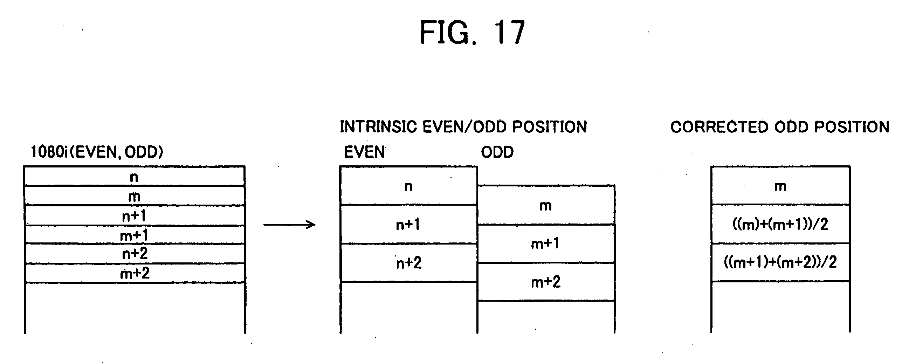

Fig. 14 is a diagram for description of the video signal converting processing example at the time of displaying the 1080i signal in the video display device of Fig. 10; Fig. 15 is a diagram for description of a method of assigning the 1080i signal (even-number field) to respective lines of the liquid crystal panel; Fig. 16 is a diagram for description of a method of assigning the 1080i signal (odd-number field) to respective lines of the liquid crystal panel; and Fig. 17 is a diagram for description of a positional relationship between the 1080i signal and 540 lines at the time of displaying the 1080i signal on the liquid crystal panel of 540 lines (PAL panel).

The 1080i signal is an interlaced video signal of 1125 scanning lines (hereinafter, 1125i signal) and among these lines, 1080 lines are the effective scanning lines. To display this 1080i signal 40 on the liquid crystal panel 20 composed of 540 pixel rows, the IP conversion is made by performing a simplified vertical scaling of converting the 1080i signal 40 to a progressive signal of 540 scanning lines (540p signal) 41 using the line memory 13. By this simplified vertical scaling processing, the 1080i signal 40 is finally converted to the 540p signal 41, which may be displayed on the liquid crystal panel 20 composed of 540 pixel rows, as indicated by reference numeral 43 in Fig. 14. Reference numeral 43 indicates a typical representation of the pixel rows of the Euro panel. Since the 1080i signal 40 is of the 16:9 type, the scaling in the horizontal direction is required in the case of displaying this signal on the 4:3-type Euro panel.

Next, description will be made of the simplified vertical scaling that is a characteristic part of the present embodiment, taking the display of the 1080i signal on the PAL panel as example. Conventionally, as shown in Fig. 4, in the case of displaying the 1080i signal on the liquid crystal panel of 540 lines, the frame memory must be used or blurring in the vertical direction must be tolerated. However, the present invention enables displaying the 1080i signal on the PAL panel without using the frame memory and without blurring in the vertical direction.

In the present embodiment, to prevent such blurred image, the display is apparently lowered by 0.5 line in terms of 540 lines (by one line in terms of 1080i signal) at the time of displaying the odd-number field and it is so arranged that the effect of lowering by 0.5 line is obtained by averaging the line to be displayed and the line immediately below at the time of displaying the odd-number field. At this moment, it is so arranged that the even-number field does not undergo the simplified scaling, either by not passing it through the simplified scaler 14 or by passing it through the simplified scaler 14 without processing.

Assignment of lines to the video signal of the odd-number field and the even-number field is illustrated in Figs. 15 and 16 and description will be made with reference to these drawings. Firstly, the video signal of the even-number field is directly displayed on respective pixel rows of the liquid crystal panel 20, such as an n line (1st line) being displayed on a first row of the pixel rows of the liquid crystal 20. On the other hand, since, with respect to the video signal m, m+1, m+2, ... of the odd-number field, the pixel rows of the liquid crystal panel 20 should be lowered by 0.5 line relative to the even-number field as shown in Fig. 17, the scaling is performed of averaging between adjacent horizontal scanning lines except for the first pixel row, such as m, ((m)+(m+1))/2, ((m+1)+(m+2))/2, ((m+2)+(m+3))/2, ..., respectively, from the top of the pixel rows of the liquid crystal panel 20. As seen above, contents of display line in the 540p represent the even-number field of the 1080i signal alternately with the average value in the odd-number field of the 1080i signal. Here, (m+1), etc., indicate the video signal on such lines. The IP conversion made by such simplified vertical scaling requires only two concurrently readable/writable lines of the line memory 13. It may be so arranged that the processing for the even-number field and the processing for the odd-number field described above can be reversed.

At the time of displaying the 1080i signal on the PAL-system liquid crystal panel 20, furthermore, the display clock of the liquid crystal panel 20 must be increased to absorb a difference in the horizontal synchronous frequency. The 1080i signal is composed of 540 lines for one field, its vertical synchronous frequency is 60 Hz, and its horizontal synchronous frequency is 33.75 kHz. On the other hand, since the panel horizontal total clock number is 972 as described above, the panel driving frequency is as follow: 33.75 kHz×972=32.8 MHz. As seen above, the liquid crystal panel 20 has the panel driving frequency set at 30.375 MHz at the time of displaying the PAL signal and at 32.8 MHz at the time of displaying the 1080i signal to increase the display clock.

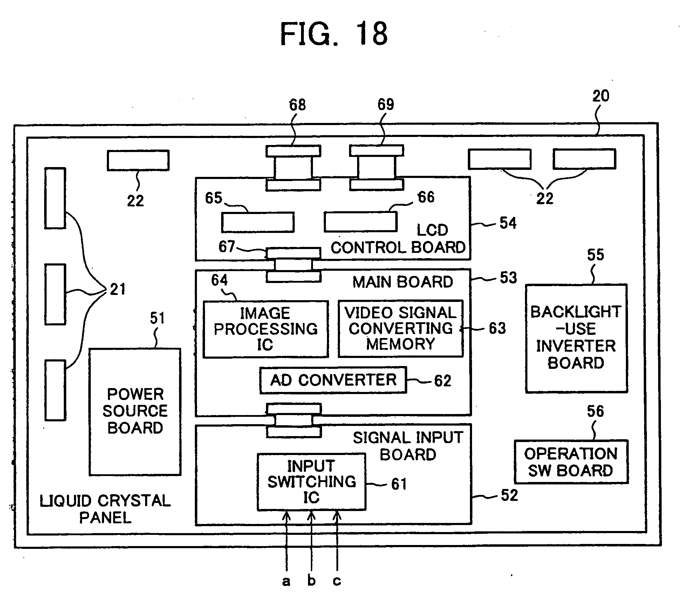

Next, description will be made of a circuit configuration example of the video display device of Fig. 10, with reference to Fig. 18. The matrix display device illustrated by Fig. 18 has the liquid crystal panel 20 mounted on its front side and has a power source board 51, a signal input board 52, a main board 53, an LCD control board 54, a backlight-use inverter board 55, and an operation switch board 56 provided on its rear side.

The signal input board 52 is provided with an input switching IC 61 corresponding to the input switching portion 11. The main board 53 is provided with an AD converter IC 62 corresponding to the AD converter 12, a video signal converting memory IC 63 corresponding to the scaling-use line memory 13, and an image processing IC 64. The image processing IC 64 is an IC corresponding to the simplified scaler 14, the image quality emphasis correcting portion 15, the OSD control portion 16, and the OSD mixing portion 17. The LCD control board 54 is provided with a γ-correcting IC 65 corresponding to the γ-correcting portion 18 and a liquid crystal controller IC 66 corresponding to the liquid crystal controller 19. The matrix display device has a gate driver 21 and a source driver 22 further provided on its rear side.

As described above, the simplified scaler 14 in the video display device according to the present embodiment is suitable for the video signal of the PAL system, etc., and therefore, in the case of displaying the PAL-system standard (SD) video signal on the Euro panel, the scaler simply IP-converts the 576i signal to the 576p signal and then converts the 576p signal to the 540p signal and all these may be done by the IP conversion of simply performing double scaling in the vertical direction in addition to the overscanning processing. On the other hand, also in the case of displaying the Hi-vision (HD) video signal on the Euro panel, this video display device is only required to perform the simplified scaling of converting the 1080i signal to the 540p signal and the horizontal scaling.

Also in the case of displaying the NTSC-system standard (SD) video signal on the PAL-system display panel such as the Euro panel, the displaying may be performed, to the vertical direction, by interpolating, by the scaler, the horizontal scanning line of the NTSC-system video signal into the horizontal scanning line corresponding to the display panel. For example, after removing the overscanning of the 525i signal and converting it to the 480i signal, the IP conversion may be performed by simplified vertical scaling of the 480i signal based on the ratio of the number of scanning lines of the 480i signal to that of the 540p signal and additionally, the horizontal scaling may be performed as required.

As seen above, while, conventionally, the frame memory must be used for the scaler or the blurred image must be tolerated, the present embodiment enables employing the simplified scaler using only the line memory of drastically smaller storage capacity, offering an advantage in terms of scale and cost due to simplification of the circuit, reducing power consumption, and providing an environmentally-friendly video display device. By displaying the horizontal scanning line signal of the video signal matched to the pixels of the panel, the present embodiment enables simplifying the scaling and preventing as much effect as possible of the scaling on the image quality. As seen above, the present embodiment enables eliminating blurred video information due to the vertical scaling and an increase in the circuit scale, the cost, and the driving power, at the time of displaying the interlaced video signal having a predetermined number of effective scanning lines such as the 1080i signal on the display panel having the vertical resolution equal or close to one half of such number of effective scanning lines.

While, in the present example, description has been made of the case of the display device whose ratio of the size in the horizontal direction to the size in the vertical direction is 4:3, it goes without saying that the present invention may likewise be practiced in the case of 16:9. While description has been made of the 1080i signal as the Hi-vision signal, a 720p signal that is a similar Hi-vision signal may also be displayed on such a display device by applying a comparatively simple scaling of 3/4 times. While description has been made of the PAL system and the SECAM system, the present invention may likewise be practiced with respect to a 576i broadcasting system, a 1080p broadcasting system, and a 576p broadcasting system.
The display device described above with respect to the present invention should preferably be a direct-view display panel. It is further preferable that this display panel has a diagonal length of 17 inches or more. In the following, taking the PAL system as example, description will be made of the reason, namely, the usefulness of the display panel corresponding to the resolution of the PAL, with reference to Table 1 below.

**[Table 1]**

| | Distance suitable for viewing TV (m) | | Difference (m) |
|---|---|---|---|
| Panel inch number | In case of NTSC (525 scanning lines) | In case of PAL (625 scanning lines) | |
| 6 | 0.53 or over | 0.44 or over | 0.09 |
| 17 | 1.51 or over | 1.26 or over | 0.24 |
| 22 | 1.96 or over | 1.64 or over | 0.31 |
| 26 | 2.31 or over | 1.94 or over | 0.37 |
| 32 | 2.84 or over | 2.38 or over | 0.45 |
| 37 | 3.28 or over | 2.76 or over | 0.52 |

Conventional display panels have been mainly liquid crystal panel complying with NTSC and therefore, in liquid crystal TV in Europe as well, panels complying with NTSC have been used. The NTSC has 525 scanning lines and it is known that these scanning lines come to be indiscernible when a viewer with eyesight of 1.0 views from a distance about 7 times as much as the longitudinal size of the panel. The distance at which the scanning lines come to be indiscernible is the distance suitable for viewing. Specific values thereof are as shown in case of NTSC of Table 1.

On the other hand, the PAL broadcasting system has 625 scanning lines and the distance at which these scanning lines come to be indiscernible is shortened by the distance equal to the ratio of 525 to 625. Specific values thereof in the PAL system, as obtained by multiplying the distance in the case of NTSC by 525/625 (0.82), are as shown in case of PAL of Table 1.

As seen above, there is a great difference in the distance suitable for viewing the TV for same inch number between the NTSC and the PAL. The PAL permits viewing closer to the TV than the NTSC does. For example, in the 37 type, the PAL system permits viewing 50 cm or more closer to the TV than the NTSC does. This is a great advantage of the PAL system.

However, in the case of displaying the PAL-system signal on the NTSC-complying panel, resolution conversion by the scaler occurs and the PAL's intrinsic 625 scanning lines can not be displayed on that panel. For this reason, conventional products were not in a situation to enjoy the advantage proper to the PAL system.

Consequently, by preparing a liquid crystal panel specialized for the number of scanning lines of the PAL system and displaying the PAL-system scanning lines one-to-one on the panel, the viewer may view closer accordingly and may enjoy the intrinsic advantage of the PAL system. As seen above, it is very meaningful to use the panel specialized for the PAL resolution.

Even if a liquid crystal panel of the resolution complying with the PAL panel is applied to a monitor of the order of 6 inches, the difference in the distance suitable for viewing depending on the numbers of scanning lines is 10 cm or less at most in the case of the 6 inch monitor. Furthermore, even if the resolution complying with the PAL panel is applied to a projector, the size of projection is not constant in the case of the projector and therefore, it may not evenly be said that such projector can obtain the advantage of the PAL system. Therefore, it is more meaningful that especially a large size liquid crystal panel is specialized for the PAL system.

Usefulness of being a direct-view display panel and further of being a panel of 17 inches or over may be understood, considering an actual use environment in which the viewer views the TV. Consideration will be made of (1) the case in which the viewer views a 17-inch TV in a private room and (2) the case in which the viewer views a 35-inch TV in a living room.

(1) The 17-inch TV is viewed mainly in the private room. Therefore, if the private room is assumed to be a room of 2.7 m × 2.7 m (about 4.5-mat room) and if the TV is located at the side of the room and the TV is viewed by the viewer at the center of the room, the viewing distance is 1.36 m. Optimum viewing distance for the 17-inch TV is 1.51 m in the case of the NTSC panel and 1.26 m in the case of the PAL-specialized panel. As seen above, since the PAL panel is viewed at the distance longer than the optimum viewing distance, the viewer may view the TV in a suitable condition.

If the living room is assumed to be a room of 4 m × 5.5 m (about 14-mat room) and if the TV is located at the side of the room and the TV is viewed by the viewer at the center of the room, the viewing distance is 2.7 m. The optimum viewing distance for the 37-inch TV is 3.28 m in the case of the NTSC panel and 2.76 m in the case of the PAL-specialized panel. As seen above, since the optimum viewing distance may be secured for the PAL panel, the viewer can view the TV in a suitable condition. With respect to other inch numbers as well, it is clear that there will be a large increase in the number of scenes in which the PAL panel can be viewed in more suitable condition than the NTSC panel.

As seen above, by optimizing the display panel for the video signal of the PAL or SECAM system, the optimum viewing distance of such display panel may be made shortest among the panels of the same size. The effect thereof becomes larger as the panel size increases.

Description has been made of the liquid crystal panel that displays the video signal of the PAL/SECAM system as the embodiment of the present invention. However, also with respect to the liquid crystal display panel that displays the video signal of other broadcasting system such as the NTSC system, if the scanning lines of the video signal and the pixels in the vertical direction of the display panel have one-to-one correspondence, if the ratio of the size in the horizontal direction to the size in the vertical direction of the display panel is the ratio of the wide size, and if the display panel enables viewing at the vertical resolution intrinsic to the broadcasting system, then such display panel may secure the optimum viewing distance according to the resolution intrinsic to the broadcasting system and therefore, is within the category of the present invention.

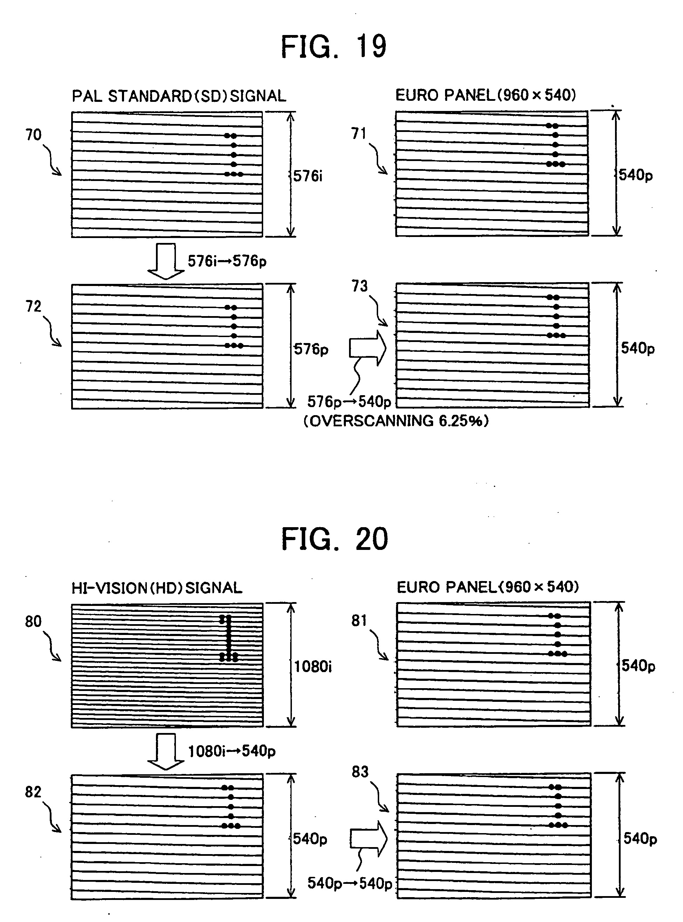

Fig. 19 is a diagram for description of the OSD display at the time of displaying the PAL-system standard (SD) video signal on a 16:9-type wide Euro panel of European standard (960 dots × 540 dots), in the configuration of Fig. 10.

In the example of Fig. 19, after the AD conversion of the interlaced video signal of 576 scanning lines (576i video signal) at the AD converter 12, the on-screen signal of characters, etc., is superimposed over the digital video signal at the OSD mixing portion 17. Here, the on-screen signal is superimposed, for example, as character information "1" indicated by reference numeral 70 of Fig. 19.

Then, the simplified scaler 14 converts the video signal over which the on-screen signal is superimposed to the progressive signal of 576 scanning lines (576p signal) indicated by reference numeral 72 of Fig. 19. Here, the simplified scaling is performed of simply doubling the number of scanning lines of the field. Then, the 576p signal indicated by reference numeral 72 of Fig. 19 is converted by the overscanning processing to the progressive signal of 540 scanning lines indicated by reference numeral 73 of Fig. 19.

In this case, while the superimposing of the on-screen signal by the OSD mixing portion 17 is performed at a stage prior to the simplified scaler 14, the superimposed on-screen signal of the characters, etc., may be displayed without blurring since the processing at the simplified scaler 14 is the simplified scaling that does not involve the between-line calculation.

Fig. 20 is a diagram for description of the OSD display at the time of displaying the Hi-vision (HD) video signal on the 16:9-type wide Euro panel of European standard (960 dots × 540 dots), in the configuration of Fig. 10.

In the case of the Hi-vision (HD) signal as well, in the same way as in the case of the PAL standard (SD) video signal, over the 1080i video signal converted to the digital signal at the AD converter 12, for example, character information "1" indicated by reference numeral 80 of Fig. 20 is superimposed as the on-screen signal. Then, the simplified scaler 14 converts the video signal over which the on-screen signal is superimposed to the progressive signal of 540 scanning lines (540p signal) indicated by reference numeral 82 of Fig. 20. Thus obtained 540p signal may directly be displayed on the wide Euro panel having 540 pixel rows (indicated by reference numeral 83 of Fig. 20).

In this case as well, since the video signal over which the on-screen signal is superimposed may directly be displayed on the Euro panel without necessity of the scaling involving the between-line calculation at the simplified scaler 14, the superimposed on-screen signal of the characters, etc., may be displayed without blurring.

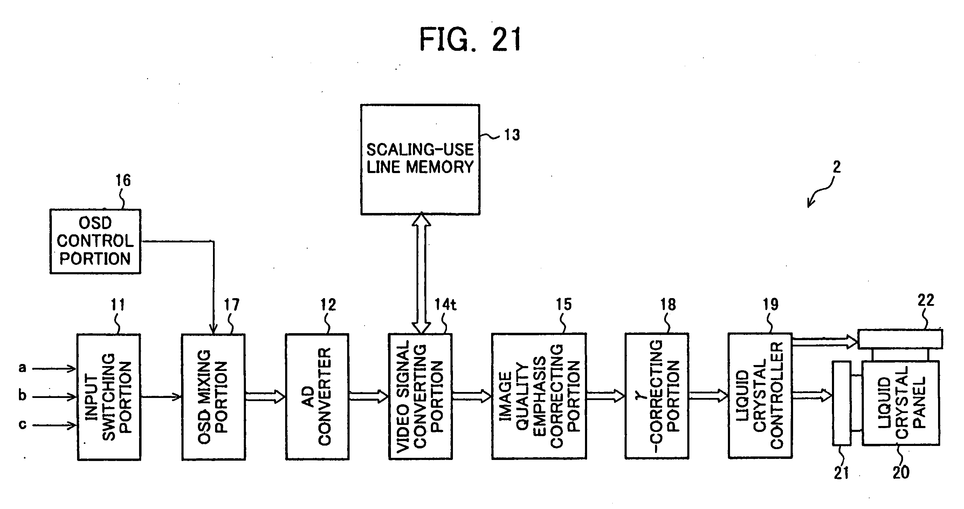

Fig. 21 is a diagram of a main part in one configuration example of the video display device according to other embodiment of the present invention. As described above, the present invention enables superimposing the on-screen signal of the characters, etc., for the OSD display over the video signal at a stage prior to the simplified scaler 14. Therefore, the OSD mixing portion 17 not only may be configured to be arranged between the AD converter 12 and the simplified scaler 14 but also may be configured to be disposed at a stage prior to the AD converter 12, as in the video display device 2 shown by Fig. 21, so that the on-screen signal of the characters, etc., will be superimposed over the analog video signal. In this case, since a low-cost analog character superimposing IC may be applied as the OSD mixing portion 17, the effect may be obtained of simplifying the circuit and reducing the cost of the apparatus.

In the video display device 2 of the present invention, because the simplified scaler may be used as the video signal converting portion 14t, there is no heed to use the frame memory, and the circuit may be simplified, the effect may also be obtained of reducing the power consumption and providing an environmentally friendly product.

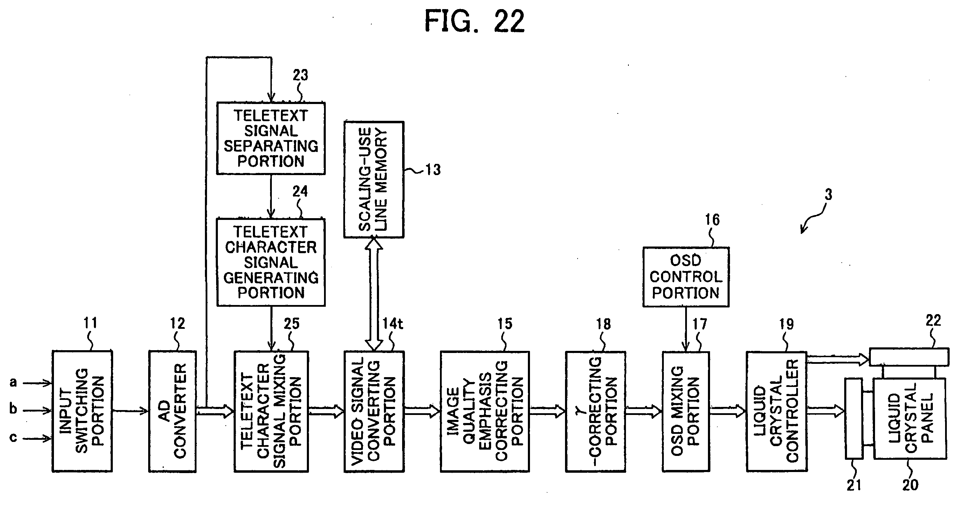

Fig. 22 is a diagram of a main part in one configuration example of the video display device according to other embodiment of the present invention. In Fig. 22, reference numeral 23 indicates a teletext signal separating portion that separates a character data signal from the input video signal; reference numeral 24 indicates a teletext character signal generating portion that generates a character signal from the character data signal; and reference numeral 25 indicates a teletext character signal mixing portion that superimposes the character signal over the video signal. A video display device 3 of the present invention, which has the teletext character signal mixing portion 25 disposed at a stage prior to the video signal converting portion 14t corresponding to the simplified scaler 14 and the ODS mixing portion 17 disposed at a stage subsequent to the teletext character signal mixing portion 25 (here, at a stage subsequent to the video signal converting portion 14t), may superimpose the character signal over the video signal at a stage prior to the video signal converting portion 14t. While, in Figs. 22 to 24, the character signal is described as the European teletext, the signal may likewise be described, for example, as a closed caption (U.S.A.) or a multiplexed text (Japan).

In Fig. 22, the character of the teletext or closed caption transmitted as contained in the video signal, which has its display position predetermined relative to the video signal, such as from which line of the video signal to display the character in terms of the vertical position or after how many microsecond from the horizontal synchronous signal to display the character in terms of the horizontal position, must be superimposed before the video signal is converted. However, in the conventional TV performing digital processing, the AD conversion followed by the signal conversion made the superimposed character signal blurred due to the between-line calculation, but according to the present invention, the liquid crystal panel 20 is designed to have such number of scanning lines that enables the signal conversion without performing the between-line calculation of the video signal and therefore, even after the signal conversion of the video signal over which the character signal is superimposed, no blurring is caused to the character signal.

The OSD signal of a menu, etc., generated within the body of the video display device 3, which must be displayed in preference to the video signal and the character signal, must be superimposed after the superimposition of the character signal. With respect to the OSD signal as well, since no blurred character is caused by the signal conversion in the same manner as in the case of the character signal, the OSD processing may be arranged freely, either before or after the signal conversion.

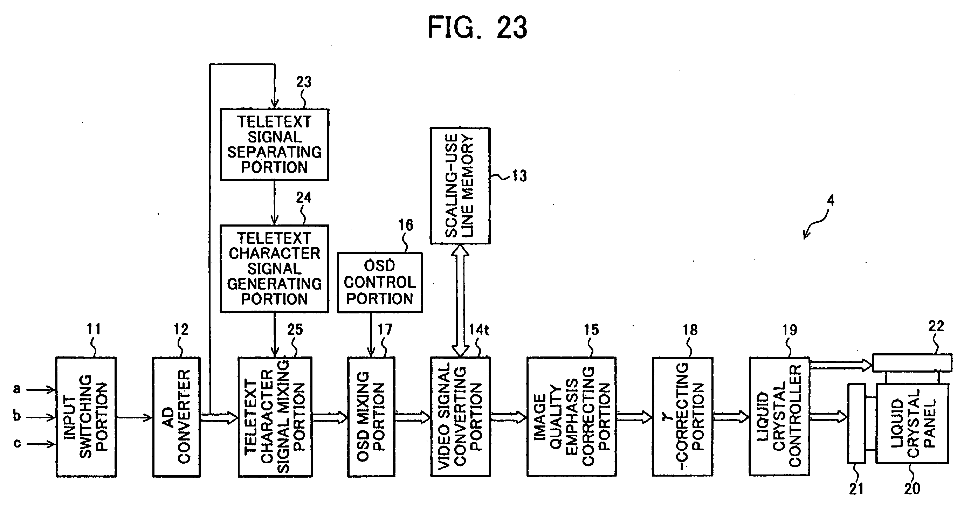

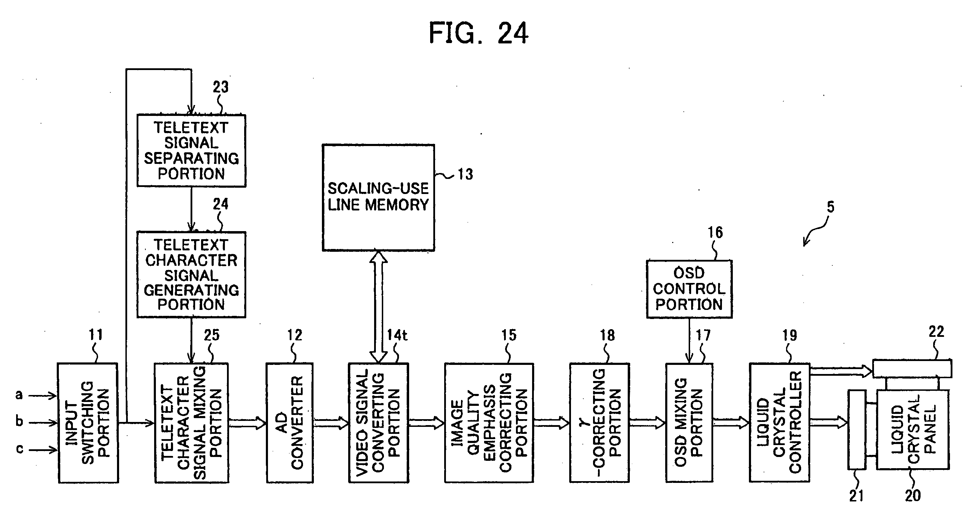

Therefore, the video display device not only may be configured to arrange the teletext character signal mixing portion 25 at a stage prior to the video signal converting portion 14t and arrange the OSD mixing portion 17 at a stage subsequent to the video signal converting portion 14t as shown in Fig. 22 but also may be configured to arrange the OSD mixing portion 17 between the teletext character signal mixing portion 25 and the video signal converting portion 14t as in the video display device 4 shown in Fig. 23. It may be so arranged that, as shown in a video display device 5 of Fig. 24, the teletext character signal mixing portion 25 is disposed at a stage prior to the AD converter 12 and the OSD mixing portion 17 is disposed at a stage subsequent to the AD converter 12 so that the character signal is superimposed over the analog video signal. In this case, since a low-cost analog character superimposing IC may be applied as the teletext character signal mixing portion 25, the effect may be obtained of simplifying the circuit and reducing the cost of the apparatus.
In Figs. 22 and 23, it may be so arranged that the teletext signal separating portion 23 is disposed at a stage prior to the AD converter 12.

While, in the above configuration examples, description has been made of the matrix liquid crystal display device for the PAL-system video source, it may be easily understood by a person skilled in the art that the present invention may likewise be applied to the matrix liquid crystal display device for the SECAM-system video source. Likewise, the present invention may be applied to the matrix liquid crystal display device for the video source of the 576i broadcasting system or the 576p broadcasting system. While description has been made of the case of the matrix display panel represented by the liquid crystal panel, the present invention may be applied to the display device using the plasma panel as well.

While the description up to now has been made based on the wide display device with the aspect ratio of 16:9, it is apparent that same effect may be obtained for the standard aspect display device with the aspect ratio of 4:3. In this case, appropriate number of pixels in the horizontal direction is of the order of 720.

The present invention gives the same effect with respect to the matrix liquid crystal apparatus for the NTSC-system video source. Namely, the NTSC-system video signal has about 480 horizontal lines used for display for one frame. Therefore, if the matrix display device is made to have 480 pixels in the vertical direction, then the number of display lines of the video signal and the number of pixels in the vertical direction of the display device may be made equal. For this reason, even if the video signal is converted for the display device after the character is superimposed, neither the video signal nor the character signal is blurred since the one-to-one conversion may be made of the horizontal lines to the pixels in the vertical direction. Since the number of pixels in the vertical direction is 480, appropriate number of pixels in the horizontal direction is of the order of 853 for the wide aspect ratio of 16:9 and of the order of 640 for the standard aspect ratio of 4:3.
The present invention may give the same effect with respect to the matrix liquid crystal apparatus for the video source of the 480i broadcasting system, as in the case of the matrix liquid crystal apparatus for the NTSC-system video source.

While examples of the present invention have been described above, it should be understood by a person skilled in the art that the present invention is not to be limited to these examples and that various changes may be made within the scope of the invention defined in the claims.
While the designation of the video display device has been used in the present embodiments, this is for the sake of convenience of description and it goes without saying that the designation may be the liquid crystal panel, the PAL panel, or the NTSC panel, etc.

## Claims

1. A video display device (3) comprising:
a video signal input portion (11) that inputs an interlaced video signal having a predetermined number of scanning lines;
a video signal converting portion (14t) that converts the scanning lines to be used for display out of the video signal from the video signal input portion (11) to a progressive video signal having a number of scanning lines equal to the reciprocal of an integer of the predetermined number of scanning lines;
a matrix display panel (20) that inputs the video signal from the video signal converting portion (14t) and displays a progressive video;
a means (23) of separating a character data signal from the input video signal;
a means (24) of generating a character signal from the character data signal:
a character signal superimposing portion (25) that superimposes the character signal over the video signal; and
an OSD mixing portion (17) that superimposes an on-screen signal for OSD display over the video signal, the OSD signal having been generated within the video display device (3), wherein
the character signal superimposing portion (25) is disposed at a stage prior to the video signal converting portion (14t) and the OSD mixing portion (17) is disposed at a stage subsequent to the character signal superimposing portion (25).

2. A video display device (3) comprising:
a video signal input portion (11) that inputs an interlaced video signal having a predetermined number of scanning lines;
an AD converter (12) that converts the video signal to a digital video signal;
a video signal converting portion (14t) that converts the scanning lines to be used for display out of the digital video signal to a progressive digital video signal having a number of scanning lines equal to the reciprocal of an integer of the predetermined number of scanning lines;
a matrix display panel (20) that inputs the video signal from the video signal converting portion and displays a progressive video;
a means (23) of separating a character data signal from the input video signal;
a means (24) of generating a character signal from the character data signal:
a character signal superimposing portion (25) that superimposes the character signal over the video signal; and
an OSD mixing portion (17) that superimposes an on-screen signal for OSD display over the video signal, the OSD signal having been generated within the video display device (3), wherein
the character signal superimposing portion (25) is disposed at a stage prior to the AD converter (12) and the OSD mixing portion (17) is disposed at a stage subsequent to the AD converter (12).

## Patentansprüche

1. Videoanzeigevorrichtung (3), die enthält:
einen Videosignaleingabeabschnitt (11), der ein Interlaced-Videosignal eingibt, das eine vorgegebene Anzahl von Abtastzeilen aufweist;
einen Videosignalumsetzungsabschnitt (14t), der die Abtastzeilen, die aus dem Videosignal von dem Videosignaleingabeabschnitt (11) zur Anzeige verwendet werden sollen, in ein progressives Videosignal umsetzt, das eine Anzahl von Abtastzeilen aufweist, die gleich dem Kehrwert einer ganzen Zahl aus der vorgegeben Anzahl von Abtastzeilen ist;
ein Matrixanzeigefeld (20), das das Videosignal vom Videosignalumsetzungsabschnitt (14t) eingibt und ein progressives Video anzeigt;
Mittel (23) zum Trennen eines Zeichendatensignals von dem eingegebenen Videosignal;
Mittel (24) zum Erzeugen eines Zeichensignals aus dem Zeichendatensignal;
einen Zeichensignalüberlagerungsabschnitt (25), der das Zeichensignal dem Videosignal überlagert; und
einen OSD-Mischabschnitt (17), der ein On-Screen-Signal für OSD-Anzeige dem Videosignal überlagert, wobei das OSD-Signal innerhalb der Videoanzeigevorrichtung (3) generiert wurde, wobei
der Zeichensignalüberlagerungsabschnitt (25) an einer Stufe vor dem Videosignalumsetzungsabschnitt (14t) angeordnet ist und der OSD-Mischabschnitt (17) an einer Stufe angeordnet ist, die dem Zeichensignalüberlagerungsabschnitt (25) nachgeschaltet ist.

2. Videoanzeigevorrichtung (3), die enthält:
einen Videosignaleingabeabschnitt (11), der ein Interlaced-Videosignal eingibt, das eine vorgegebene Anzahl von Abtastzeilen aufweist;
einen A/D-Umsetzer (12), der das Videosignal in ein digitales Videosignal umsetzt;
einen Videosignalumsetzungsabschnitt (14t), der die Abtastzeilen, die aus dem digitalen Videosignal zur Anzeige verwendet werden sollen, in ein progressives Videosignal umsetzt, das eine Anzahl von Abtastzeilen aufweist, die gleich dem Kehrwert einer ganzen Zahl aus der vorgegeben Anzahl von Abtastzeilen ist;
ein Matrixanzeigefeld (20), das das Videosignal vom Videosignalumsetzungsabschnitt (14t) eingibt und ein progressives Video anzeigt;
Mittel (23) zum Trennen eines Zeichendatensignals von dem eingegebenen Videosignal;
Mittel (24) zum Erzeugen eines Zeichensignals aus dem Zeichendatensignal;
einen Zeichensignalüberlagerungsabschnitt (25), der das Zeichensignal dem Videosignal überlagert; und
einen OSD-Mischabschnitt (17), der ein On-Screen-Signal für OSD-Anzeige dem Videosignal überlagert, wobei das OSD-Signal innerhalb der Videoanzeigevorrichtung (3) generiert wurde, wobei
der Zeichensignalüberlagerungsabschnitt (25) an einer Stufe vor dem A/D-Umsetzer (12) angeordnet ist und der OSD-Mischabschnitt (17) an einer Stufe angeordnet ist, die dem A/D-Umsetzer (12) nachgeschaltet ist.

## Revendications

1. Dispositif d'affichage vidéo (3) comportant :
une partie d'entrée de signal vidéo (11) qui reçoit un signal de vidéo entrelacée possédant un nombre prédéterminé de lignes de balayage ;
une partie de conversion de signal vidéo (14t) qui convertit les lignes de balayage à utiliser pour l'affichage à partir du signal vidéo numérique en un signal vidéo numérique progressif possédant un nombre de lignes de balayage égal à la réciproque d'un entier du nombre prédéterminé de lignes de balayage ;
un panneau d'affichage matriciel (20) qui reçoit le signal vidéo de la partie de conversion de signal vidéo (14t) et affiche une vidéo progressive ;
un moyen (23) destiné à séparer un signal de données de caractère du signal vidéo d'entrée ;
un moyen (24) de génération d'un signal de caractère à partir du signal de données de caractère ;
une partie de superposition de signal de caractère (25) qui superpose le signal de caractère au signal vidéo ; et
une partie de mixage de menu à l'écran (17) qui superpose un signal à l'écran pour affichage d'un menu à l'écran sur le signal vidéo, le signal de menu à l'écran ayant été généré dans le dispositif d'affichage vidéo (3), dans lequel
la partie de superposition de signal de caractère (25) est disposée à un étage amont par rapport à la partie de conversion de signal vidéo (14t), et la partie de mixage de menu à l'écran (17) est disposée à un étage aval par rapport à la partie de superposition de signal de caractère (25).

2. Dispositif d'affichage vidéo (3) comportant :
une partie d'entrée de signal vidéo (11) qui reçoit un signal de vidéo entrelacée possédant un nombre prédéterminé de lignes de balayage ;
un convertisseur analogique-numérique (12) qui convertit le signal vidéo en un signal vidéo numérique ;
une partie de conversion de signal vidéo (14t) qui convertit les lignes de balayage à utiliser pour l'affichage à partir du signal vidéo numérique en un signal vidéo numérique progressif possédant un nombre de lignes de balayage égal à la réciproque d'un entier du nombre prédéterminé de lignes de balayage ;
un panneau d'affichage matriciel (20) qui reçoit le signal vidéo de la partie de conversion de signal vidéo et affiche une vidéo progressive ;
un moyen (23) destiné à séparer un signal de données de caractère du signal vidéo d'entrée ;
un moyen (24) de génération d'un signal de caractère à partir du signal de données de caractère ;
une partie de superposition de signal de caractère (25) qui superpose le signal de caractère au signal vidéo ; et
une partie de mixage de menu à l'écran (17) qui superpose un signal à l'écran pour affichage d'un menu à l'écran sur le signal vidéo, le signal de menu à l'écran ayant été généré dans le dispositif d'affichage vidéo (3), dans lequel
la partie de superposition de signal de caractère (25) est disposée à un étage amont par rapport au convertisseur analogique-numérique (12), et la partie de mixage de menu à l'écran (17) est disposée à un étage aval par rapport au convertisseur analogique-numérique (12).
